# EUROPÄISCHE PATENTSCHRIFT

(11) **EP 2 291 695 B1**
(45) Veröffentlichungstag und Bekanntmachung des Hinweises auf die Patenterteilung: **09.03.2016**
(21) Anmeldenummer: 09749658.2
(22) Anmeldetag: 19.05.2009
(51) Int. Cl.: B23K 26/06, B23K 26/073, B23K 26/28, G02B 6/255

(54) **VORRICHTUNG ZUM FÜGEN UND TAPERN VON FASERN ODER VON ANDEREN OPTISCHEN BAUELEMENTEN**
DEVICE FOR JOINING AND TAPERING FIBRES OR OTHER OPTICAL COMPONENTS
SYSTÈME POUR RÉALISER UN RACCORD ET UNE TRANSITION PROGRESSIVE ENTRE DES FIBRES OU D'AUTRES COMPOSANTS OPTIQUES

(30) Priorität: 19.05.2008 DE 102008024136
(43) Veröffentlichungstag der Anmeldung: 09.03.2011
(73) Patentinhaber: Fraunhofer-Gesellschaft zur Förderung der angewandten Forschung e.V., 80686 München (DE)
(72) Erfinder: BÖHME, Steffen, 07743 Jena (DE); PESCHEL, Thomas, 07743 Jena (DE); EBERHARDT, Ramona, 07751 Bucha (DE); TÜNNERMANN, Andreas, 99425 Weimar (DE); LIMPERT, Jens, 07745 Jena (DE)
(74) Vertreter: Pfenning, Meinig & Partner mbB
(86) Internationale Anmeldenummer: PCT/EP2009/003800
(87) Internationale Veröffentlichungsnummer: WO 2009/141168

(56) Entgegenhaltungen:
- WO-A-2008/080731
- FR-A- 2 538 916
- JP-A- 2001 105 168
- US-A- 4 421 721
- US-A1- 2006 000 812

## Beschreibung

Die Erfindung betrifft eine Vorrichtung zum Fügen und Tapern von Fasern und/oder vorzugsweise zylindrischen optischen Bauelementen nach dem Oberbegriff des Hauptanspruchs.

Für das Fügen, z.B. durch Schweißen, Spleißen, Fusion und Tapern von einzelnen optischen Bauelementen, vor allem Fasern, aber auch von anderen, vorzugsweise zylindrischen oder rotationssymmetrischen optischen Bauelementen, sind verschiedene Vorrichtungen bekannt. Bei einigen erfolgt der Energieeintrag im Wesentlichen durch Wärmestrahlung, erzeugt durch speziell geformte Heizdrähte, so genannte Filamente oder mittels Lichtbogen. Um den Energieeintrag an die optische Faser durch die Wärmestrahlung zu erreichen, muss die Faser sehr dicht an dem Heizdraht oder Lichtbogen positioniert werden. Dabei besteht das Problem, dass Filamentablagerungen oder auch Gasrückstände die optische Faser verschmutzen. Weiterhin ist die Lebensdauer eines Heizdrahts nicht sehr lang. Um hier eine Verbesserung zu erzielen, wird versucht, größere und leistungsstärkere Filamente auch aus anderen Materialien einzusetzen. Durch das indirekte Heizen ist dies jedoch ineffizient. Mit anderen Materialien ergeben sich aber auch neue Probleme, wie z.B. die Notwendigkeit eines allmählichen Aufheizens beim Material Graphit. Weiterhin müssen für verschiedene Faserdurchmesser verschiedene Heizdrahtgeometrien eingesetzt werden.

Es wurden daher Spleißvorrichtungen konzipiert, bei denen ein direkter Energieeintrag durch die Absorption der Laserwellenlänge eines CO₂-Lasers vorgenommen wird. Aus der EP 0 505 044 A2 ist eine Vorrichtung zum Spleißen der Enden von zwei optischen Faserabschnitten bekannt, die Mittel zum Kontaktieren der Enden und Ausrichten der Faserabschnitte längs einer gemeinsamen Achse umfasst. Weiterhin sind Mittel zum Aufschweißen der Faserabschnitte vorgesehen, die eine Laserquelle und Mittel zum Richten eines divergierenden konischen Strahlenbündels zu einem Parabolspiegel aufweisen, wobei die Achse des Parabolspiegels mit der der ausgerichteten optischen Faserabschnitte übereinstimmt. Bei dieser Vorrichtung ist die Länge der zu bearbeitenden Teile begrenzt, da einer der Scannerspiegel in der optischen Achse der Faser liegt.

In JP1001105168 ist eine Vorrichtung zum Laserschweißen von optischen Bauelementen mit einem Doppelaxicon als erstem Strahlformungselement und einem diesem ersten Strahlformungselement nachgelagerten zweiten Strahlformungselement, das durch eine Fokusoptik gegeben ist, gezeigt. Durch Verändern des Abstands zwischen den beiden Axicon, lässt sich der Durchmesser der Kreisringstrahlung einstellen. Aus einer entsprechenden Veränderung des Durchmessers der Kreisringstrahlung resultiert eine Änderung des Eintreffwinkels im Bearbeitungsort.

In US4421721 ist eine Vorrichtung zum Herstellen einer Glasfaser mittels Laserbestrahlung eines Glaskörpers dargestellt. Diese Vorrichtung umfasst insbesondere ein erstes Strahlformungselement, das durch zwei Reflex-Axicon gegeben ist, und ein zweites Strahlformungselement, welches aus einem Parabolspiegel besteht.

FR 2538916 offenbart eine Vorrichtung zur Laserbestralung und Bearbeitung von optischen Fasern, die ein zwei Reflex-Axicon umfassendes erstes Strahlformungselement zur Umwandlung eines eintreffenden Laserstrahls in einen kreisringförmigen Strahl und einen sphärischen Spiegel zum Bündeln dieses Kreisringstrahls auf die optischen Fasern aufweist. Die Vorrichtung umfasst außerdem eine starr mit dem sphärischen Spiegel verbundene Beobachtungseinheit zum senkrechten Beobachten des Bearbeitungsortes.

Der Erfindung liegt die Aufgabe zugrunde, eine Vorrichtung zum Fügen und Tapern von Fasern und/oder vorzugsweise zylindrischen optischen Bauelementen zu schaffen, die den bekannten Stand der Technik verbessert und einen relativ einfachen Aufbau aufweist, wo-bei die Bearbeitung von unterschiedlichen Durchmessern und Längen der zu bearbeitenden Werkstücke möglich sein sollte.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Dadurch, dass mindestens ein erstes Strahlformungselement zur Erzeugung einer Kreisring-Strahlung in den Strahlengang des von der Strahlungsquelle ausgesandten Laserstrahls eingefügt ist und dass ein weiteres Strahlformungselement zur Vorgabe des Einfallswinkels der Kreisring-Strahlung auf die Faser(n) und/oder die zylindrischen optischen Bauelemente in der Bearbeitungsstellung vorgesehen ist, wird in einfacher Weise ein homogener konischer Energieeintrag bei wählbaren Einfallswinkeln zur Verfügung gestellt, wodurch eine homogene Wärmeleitung nach der Absorption und damit ein gleichmäßiges, räumlich sehr begrenztes Anschmelzen möglich wird. Bearbeitungsmöglichkeiten sind das Fügen, Tapern, Polieren, Reinigen oder dergleichen.

Die Kreisring-Strahlung wird in einfacher Weise durch die Verwendung von zwei Reflex-Axicon oder eines Doppelaxicons als erstes Strahlformungselement erzeugt. Der Abstand der Teile des Doppelaxicons oder der zwei Reflex-Axicon geben den Kreisringdurchmesser vor.

Der Abstand ist zur Erzielung unterschiedlicher Kreisringdurchmesser einstellbar. Dadurch können mit nur einer Gerätekonfiguration unterschiedliche Werkstückgrößen bearbeitet werden, wobei die Werkstückgeometrien einen Durchmesserbereich von <100 µm bis >1500 µm betragen können. Es können optische Bauteile beliebiger Größe, wie optische Funktionselemente oder planparallele Platten, z.B. Endkappen, Keilplatten usw. an beliebige Faserdurchmesser mittels Spleißen gefügt werden. Eine stufenlose Änderung der Durchmesser der Schweißpartner ist sehr einfach, ohne Kalibrierung, umzusetzen. Weiterhin können auch andere zylindrisch geformte Elemente, wie andere optische Bauelemente bearbeitet werden. Die Beschränkungen sind nur durch die mechanischen Aufnahmen der zu spleißenden Bauteile und die zur Verfügung stehende, gut reproduzierbare Laserleistung gegeben.

Durch Vorsehen von Mitteln zur variablen Einstellung des Einfallswinkels am Bearbeitungsort, beispielsweise durch ein Stufenaxicon oder Parabolspiegel im Zusammenhang mit dem Doppelaxicon oder den zwei Reflex-Axicon kann der Einfallswinkel für unterschiedliche Bearbeitungsprozesse (Tapern, Spleißen) vorteilhaft variabel eingestellt werden.

Vorzugsweise wird der Lasereinfallswinkel so gewählt, dass der Bearbeitungsort immer senkrecht zur Werkstückachse z.B. Faserachse beobachtbar ist, z.B. mittels CCD-Kameras, wodurch eine Justage der oder des zu bearbeitenden Werkstücks in zwei orthogonalen Ebenen erlaubt oder vereinfacht wird.

Weiterhin wird der Einfallswinkel so gewählt, dass ein vorgegebener Abstand zwischen Bearbeitungsort und einem Planspiegel vorgesehen ist. Der vorgesehene Abstand wird so definiert, dass der Planspiegel nicht durch den Bearbeitungsprozess, z.B. durch Schmauch oder Gase beeinflusst, d.h. verschmutzt wird. Ein bevorzugter Wert für den Abstand ist >= 10mm.

Das verwendete Axicon bzw. das Doppelaxicon kann in Reflexion oder Transmission arbeiten.

In einem vorteilhaften Ausführungsbeispiel ist das zweite Strahlformungselement zur Einstellung des Einfallswinkels ein Stufenaxicon das die Kreisring-Strahlung auf die Füge- oder Taperstellung lenkt. Vorteilhaft ist die Verwendung eines weiteren Doppelaxicons in Stufenform, wodurch die Einstellung des Einfallswinkels, insbesondere bei einem Doppelaxicon als erstes Strahlformungselement vorgenommen werden kann.

Um einen Laserstrahl nicht fokussiert auf die Bearbeitungs- bzw. Füge- oder Taperstelle zu bringen und die Leistungsdichte auf der zu bearbeitenden Oberfläche zu mindern, kann in einem vorteilhaften Ausführungsbeispiel das Stufenaxicon zur Einstellung des Einfallswinkels mit einer zusätzlichen Sphäre, Asphäre oder diffraktiven Struktur versehen sein, die eine divergente/konvergente reflektierte Strahlung erzeugt. Selbstverständlich kann dies auch durch ein weiteres optisches Element erreicht werden, das zwischengeschaltet ist. Insgesamt führt die bessere Homogenisierung der Laserstrahlung zu einem homogenen Taper- oder Spleißergebnis bei gleichzeitig entspannteren Toleranzen, d.h. Justage der Fasern zueinander und zum Laserring. Dadurch wird insgesamt die Prozessstabilität und die Reproduzierbarkeit verbessert.

Ein anderes Ausführungsbeispiel für das zweite Strahlformungselement zur Vorgabe des Einfallswinkels ist die Verwendung eines Parabolspiegels. Dadurch wird ermöglicht, den Strahlungseinfall von streifend bis senkrecht zu verändern. Für den Parabolspiegel gilt bezüglich der Änderung der Leistungsdichte das oben Gesagte.

Eine noch andere Form des zweiten Strahlformungselements des Standes der Technik ist eine Fokusoptik, die dem Doppelaxicon nachgeschaltet ist. Durch den am Planspiegel umgelenkten, konisch zulaufenden Laserring können Werkstücke unterschiedlicher Durchmesser bearbeitet werden.

Vorteilhafterweise ist der Planspiegel, der im Zusammenhang mit allen Ausführungsbeispielen verwendet werden kann, geschlitzt oder geteilt und mit einer ebenfalls geteilten Lochbohrung versehen, um so die zu bearbeitenden Werkstücke bzw. ihre Halterung zuzuführen. Dies gilt gleichermaßen für das als zweites Strahlformungselement ausgebildete Stufenaxicon bzw. den Parabolspiegel.

Durch den Einsatz des Planspiegels vor dem Bearbeitungsort wird die Justage vereinfacht, da eine Funktionstrennung zwischen vorgelagerter Fokussieroptik (zwei Reflex-Axicon, Doppelaxicon) und Strahlumlenkung durch den Planspiegel erreicht wird. Da der Laserring das Werkstück homogen umschließen soll, bietet ein geteilter Planspiegel mit ebenfalls geteilter Lochbohrung einerseits einen undurchbrochenen Laserring. Andererseits kann durch Öffnen des geteilten Planspiegels mit Lochbohrung, z.B. mittels Scharnier, eine sehr vorteilhafte Werkstückbestückung erfolgen. Insbesondere lange Werkstücke, wie z.B. optische Fasern, können beliebig lang sein und müssen nicht für die Bearbeitung durch eine Lochbohrung "gefädelt" werden.

In einer vorteilhaften Weiterbildung ist der Laserstrahlquelle ein Teleskop zur Anpassung des Laserstrahldurchmessers und gegebenenfalls der Leistungsdichte an der Bearbeitungs- bzw. Füge- oder Taperstelle nachgeordnet.

Zusammenfassend kann gesagt werden, dass mit dieser universellen, relativ kompakten erfindungsgemäßen Gerätekonfiguration die bestehenden Beschränkungen bezüglich des homogenen Energieeintrags bei gleichzeitig angepasster Prozessführung, d.h. Anpassung an die Geometrien oder der der zu bearbeitenden Werkstücke erheblich erweitert werden.

Eine vorteilhafte Weiterbildung für die Halterung des jeweiligen Axicon liegt darin, dass als Halteelement für die Axiconspitze eine Planplatte aus für die Laserstrahlung hochtransmittivem Material, z.B. Zinkselenid mit AR-Entspiegelung und Lochbohrung zur Fixierung der Axiconspitze eingesetzt wird. Dadurch wird die Laserstrahlgeometrie (d.h. der Ring) nicht gestört und die Laserstrahlung wird nicht geblockt.

Die erfindungsgemäße Vorrichtung kann für Werkstücke mit unterschiedlichen Durchmessern ohne erneute Kalibrierung verwendet werden. Es können neben reinem Kieselglas/Quarzglas dotierte Kiesel- und Quarzgläser und auch alle anderen in dem verwendeten Wellenlängenbereich absorbierende Gläser, sowie deren Derivate, z.B. durch Ionenaustausch hergestellte Grinlinsen auf Borosilikatglasbasis aufgeschmolzen werden, soweit der Ausdehnungskoeffizient der Fügepartner dies zulässt. Auch für das Tapern von symmetrischen geformten Körpern, wie z.B. optischen Fasern, ergeben sich mit dem CO₂-Laser neue Möglichkeiten, da durch den symmetrischen Energieeintrag wesentlich dickere Gläser bearbeitet werden können. Auch ist damit das Bearbeiten von anderen zylindrischen Materialien, die in diesem Wellenlängenbereich die Laserstrahlung absorbieren, möglich.

Dadurch, dass für die Halterung eines der Axicon des Doppelaxicons oder der zwei Reflex-Axicon eine hochtransparente Platte, vorzugsweise aus Zinkselenid, mit einen Loch für die Aufnahme und präzise Festlegung der Kegelspitze des Axicons verwendet wird, wird die Laserstrahlung nicht gestört.

Ausführungsbeispiele der Erfindung sind in der Zeichnung dargestellt und werden in der nachfolgenden Beschreibung näher erläutert. Es zeigen:
- Fig. 1: einen schematischen Aufbau eines ersten Ausführungsbeispiels der erfindungsgemäßen Vorrichtung mit einem Doppelaxicon als erstem Strahlformungselement und einem Stufenaxicon als zweitem Strahlformungselement,
- Fig. 2: ein zweites Ausführungsbeispiel mit einem Doppelaxicon als erstem Strahlformungselement und einem Parabolspiegel als zweitem Strahlformungselement, und
- Fig. 3: ein Beispiel aus dem Stand der Technik mit einem Doppelaxicon als erstem Strahlformungselement und einer Fokusoptik als zweitem Strahlformungselement.

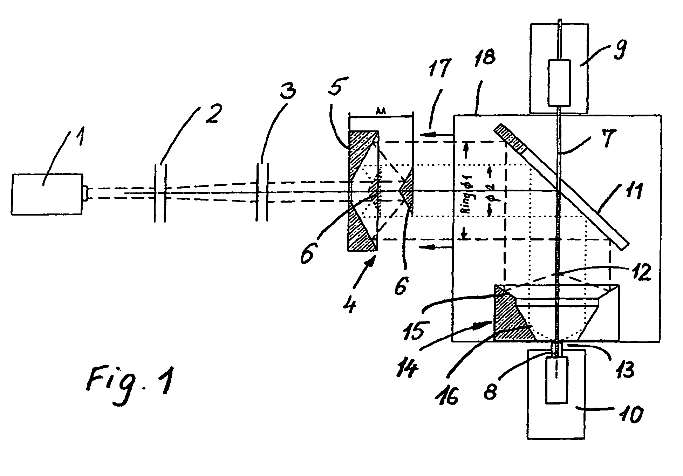

Die in Fig. 1 dargestellte Vorrichtung weist einen CO₂-Laser 1 auf, der ein Laserstrahlbündel auf ein Teleskop mit einer ersten Linse 2 und einer zweiten Linse 3 projiziert, das zur Anpassung des Laserstrahldurchmessers dient. Dem Teleskop 2, 3 nachgeschaltet ist ein Doppelaxicon 4, das in Reflexion arbeitet, und das aus einem negativen ersten Axicon 5 in Ringform und einem positiven zweiten, mit einem Abstand AA beabstandeten Axicon 6 in Kegelform besteht, die gleiche absolute Winkel zur Erzeugung eines konstanten Kreisringdurchmessers haben. Das Axicon 5 umfasst einen Durchgang für den Durchtritt des aus dem Teleskop 2, 3 kommenden Laserstrahls, der auf das zweite Axicon 6 trifft. Der Abstand AA zwischen den beiden Axicons 5, 6 ist stufenlos einstellbar und er bestimmt den Kreisringdurchmesser der weitergeleiteten Laserstrahlung. In Fig. 1 ist das zweite Axicon 6 in zwei verschiedenen Stellungen gezeigt, wodurch sich der gestrichelt dargestellte Strahlungsweg mit dem Laserringdurchmesser φ1 und der gepunktete Strahlungsweg mit dem Laserringdurchmesser φ2 ergibt. Die auf das zweite Axicon 6 fallende Strahlung wird an den konischen Flächen reflektiert, trifft auf das erste Axicon 5 und wird gleichfalls dort reflektiert.

Die zu fügenden Werkstückteile 7, 8 als Schweißpartner, die z.B. als optische Faser oder andere optische, vorzugsweise zylindrische optische Bauelemente ausgebildet sein können, sind jeweils in einer motorischen Achse mit Halter 9, 10 aufgenommen und zueinander ausgerichtet. In den Kreisring-Strahlengang ist ein geschlitzter oder zweigeteilter, zueinander justierbarer Planspiegel 11, dessen Hälften auch jeweils mit einem Scharnier verbunden sein können, angeordnet, wobei der erste Schweißpartner 7 den Schlitz des Planspiegels 11 durchgreift. In der geteilten Ausführung weist der Planspiegel 11 eine ebenfalls geteilten Lochbohrung für den Durchgang des Werkstücks auf.

Zur Konzentrierung der durch den Planspiegel 11 im vorliegenden Ausführungsbeispiel um 90° umgelenkte Kreisringstrahlung auf den Schweißort 12, 13 ist ein Stufenaxicon 14 vorgesehen, wobei die Laserstrahlung mit dem größeren Ringdurchmesser an der kegelförmigen Fläche des ersten Axicons 15 des Stufenaxicons 14 reflektiert wird und auf den Schweißort 12 bzw. die Fügestelle trifft. Die Laserstrahlung mit dem kleineren Ringdurchmesser 2 wird auf das zweite Axicon 16 des Stufenaxicons 14 mit steilerem Kegelwinkel geleitet und, wie aus der Figur zu erkennen ist, auf den Schweißort bzw. die Fügestelle 13 reflektiert. Das Stufenaxicon 14 kann ebenfalls geschlitzt oder geteilt wie der Panspiegel ausgelegt sein.

Bei Verwendung eines geschlitzten Planspiegels und eines geschlitzten Stufenaxicons wird durch die Pfeile 17 und den Kasten 18 angedeutet, dass diese Anordnung in der Zeichnung nach links verfahrbar ist, um ein Bestücken der Halter 9, 10 zu ermöglichen. Zur Bearbeitung mit dem Laser wird die Anordnung wieder zurück verfahren. Es reicht jedoch auch aus, wenn lediglich der geteilte Planspiegel 11 mit Lochbohrung und gegebenenfalls das geteilte Stufenaxicon 14 zum Bestücken der Haltevorrichtung geöffnet und geschlossen werden. Das Loch im Planspiegel 11 definiert den maximal einstellbaren Einfallswinkel, z.B. bezüglich der optischen Faserachse.

Wie aus dieser Anordnung zu erkennen ist, kann durch die Einstellung des Abstands AA zwischen dem ersten und zweiten Axicon des Doppelaxicons 4 und die Neigung der Kegelflächen des ersten und zweiten Axicons 15, 16 des Stufenaxicons 14 die Schweiß- oder Fügestelle 12, 13 und der Einfallswinkel der Laserstrahlung auf die Schweiß- oder Fügestelle 12, 13 geändert werden. In den Flächen des Stufenaxicons 14 kann eine zusätzliche Sphäre, Asphäre oder diffraktive Struktur oder mehrere davon eingearbeitet sein, wodurch die Leistungsdichte der reflektierte Strahlung an der Schweiß- oder Fügestelle 12, 13 gezielt beeinflusst wird. Es kann jedoch dazu ein getrenntes optisches Bauteil vorgesehen werden.

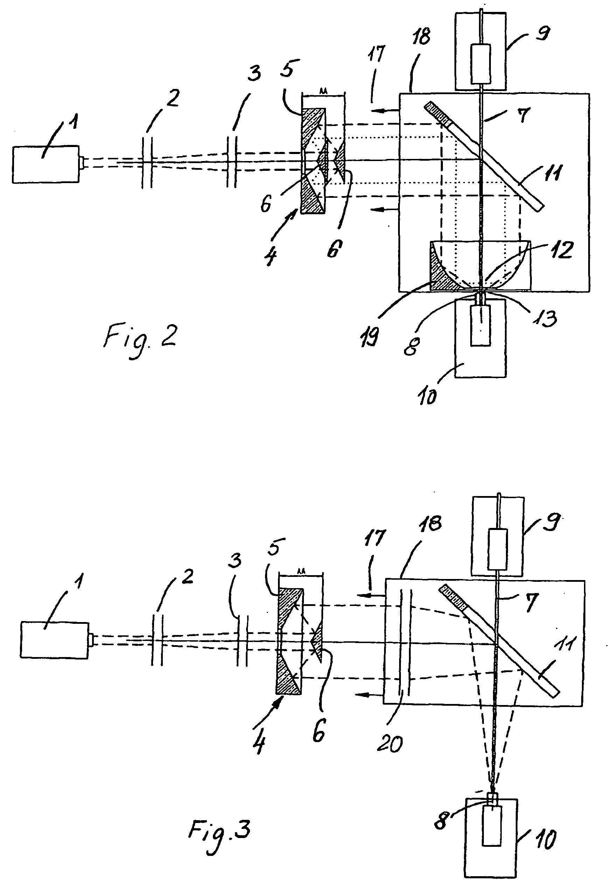

In Fig. 2 ist ein zweites Ausführungsbeispiel der erfindungsgemäßen Anordnung dargestellt, das sich von der ersten Anordnung dadurch unterscheidet, dass anstelle des Stufenaxicons 14 in Fig. 1 ein Parabolspiegel 19 verwendet wird, der je nach Ausführung gleichfalls geschlitzt oder geteilt für den Durchtritt des Werkstücks sein kann. Grundsätzlich ist die Funktionsweise im Wesentlichen die gleiche wie in Fig. 1.

In Fig. 3 wird wiederum das Doppelaxicon 4 verwendet, dem eine Fokusoptik 20 nachgeschaltet ist, wobei die fokussierte Kreisringstrahlung wiederum auf den Planspiegel 11 fällt, der die Strahlung auf die Fügestelle lenkt.

In diesem Beispiel aus dem Stand der Technik wird der Abstand zwischen dem ersten Axicon 5 und dem zweiten Axicon 6 des Doppelaxicons 4 fest eingestellt, wobei die Fokusoptik 20 dieser Einstellung zugeordnet ist.

In den verschiedenen Ausführungsbeispielen dient das Teleskop 2, 3 zur Anpassung des Laserstrahldurchmessers. In gewissem Umfang trägt das Teleskop 2, 3 auch zur Anpassung der Leistungsdichte im Schweiß- bzw. Fügeort bei.

Für das Doppelaxicon bzw. die Reflex-Axicon ist keine Halterung dargestellt. Wichtig ist, dass das jeweilige Axicon derart gehaltert wird, dass es keine Störungen der Laserstrahlung verursacht. Dies kann beispielsweise durch Einsatz einer transmittiven planparallelen Platte, z.B. aus Zinkselenid mit einer Antireflexbeschichtung realisiert werden, die mit einem Loch für die Aufnahme der Kegelspitze des Axicon versehen ist und somit als Halter dient. Die Kegelspitze ist mit der Platte z.B. durch Befestigungsmittel oder Klebung verbunden.

## Patentansprüche

1. Vorrichtung zum Fügen und Tapern von Fasern oder optischen Bauelementen mit einer Halteeinrichtung zum Halten der Fasern oder der optischen Bauelemente in der Bearbeitungsstellung, einer Laserstrahlquelle zum Aussenden eines Laserstrahls und Strahlformungselementen zum Lenken des Laserstrahls an den Bearbeitungsort,
wobei mindestens ein erstes Strahlformungselement (4, 25) zur Erzeugung einer Kreisring-Strahlung in den Strahlengang eingefügt ist und dass ein weiteres, zweites Strahlformungselement (14, 19, 20) zur Vorgabe des Einfallswinkels der Kreisring-Strahlung auf die Faser(n) oder die optischen Bauelemente in der Bearbeitungsstellung vorgesehen ist,
wobei das erste Strahlformungselement als zwei Reflex-Axicon oder als ein Doppelaxicon (4) mit zueinander beabstandeten Teilen (5, 6) ausgebildet ist, wobei der Abstand der zwei Reflex-Axicon oder der Teile (5, 6) des Doppelaxicons den Kreisringdurchmesser der Strahlung vorgibt,
wobei zur Erzielung unterschiedlicher Kreisringdurchmesser der Strahlung der Abstand der Teile (5, 6) des Doppelaxicons (4) oder die Reflex-Axicon einstellbar ist,
**dadurch gekennzeichnet, dass** das weitere, zweite Strahlformungselement ein Stufenaxicon oder ein Parabolspiegel ist, das oder der die Kreisring-Strahlung auf den Bearbeitungsort lenkt, zum variablen Einstellen des Einfallswinkels am Bearbeitungsort.

2. Vorrichtung nach Anspruch 1, **dadurch gekennzeichnet, dass** der Abstand der Teile (5, 6) des Doppelaxicons 84) oder die Reflex-Axicon stufenlos einstellbar ist.

3. Vorrichtung nach einem der Ansprüche 1 oder 2,
**dadurch gekennzeichnet, dass** der Einfallswinkel derart einstellbar ist, dass der Bearbeitungsort senkrecht zur Achse der Faser(n) oder des optischen Bauelements einsehbar ist.

4. Vorrichtung nach einem der Ansprüche 1 bis 3,
**dadurch gekennzeichnet, dass** zwischen erstem und weiterem zweiten Strahlformungselement (4, 16, 19) oder zwischen zweitem Strahlformungselement und Bearbeitungsort ein Planspiegel (11) zum Umlenken der Kreisringstrahlung angeordnet ist.

5. Vorrichtung nach Anspruch 4, **dadurch gekennzeichnet, dass** der Abstand zwischen Bearbeitungsort und Planspiegel definiert ist zur Verhinderung einer Verschmutzung des Planspiegels durch den Bearbeitungsprozess.

6. Vorrichtung nach Anspruch 5, **dadurch gekennzeichnet, dass** der Planspiegel (11) zweigeteilt ist und eine Lochbohrung aufweist oder geschlitzt ist.

7. Vorrichtung nach Anspruch 6, **dadurch gekennzeichnet, dass** das Stufenaxicon (14) oder der Parabolspiegel (19) geteilt oder geschlitzt sind.

8. Vorrichtung nach einem der Ansprüche 1 bis 7, **dadurch gekennzeichnet, dass** Mittel zur Minderung oder Änderung der Leistungsdichte der Strahlung an dem Bearbeitungsort im Strahlengang vorgesehen sind.

9. Vorrichtung nach Anspruch 8, **dadurch gekennzeichnet, dass** die Mittel zur Minderung oder Änderung der Leistungsdichte als in das Stufenaxicon (16) oder den Parabolspiegel (19) eingearbeitete Struktur zur Minderung der Leistungsdichte der Strahlung, wie eine zusätzliche Sphäre, Asphäre oder defraktive Struktur zur Erzeugung einer divergenten oder konvergenten reflektierten Strahlung oder als ein zusätzliches optisches Element ausgebildet sind.

10. Vorrichtung nach einem der Ansprüche 1 bis 9, **dadurch gekennzeichnet, dass** der Laserstrahlquelle (1) ein Teleskop (2, 3) zur Anpassung des Laserstrahldurchmessers und gegebenenfalls der Leistungsdichte an der Bearbeitungsstellung nachgeordnet ist.

11. Vorrichtung nach einem der Ansprüche 4 bis 10, **dadurch gekennzeichnet, dass** der Planspiegel (11) oder das Stufenaxicon oder der Parabolspiegel zum Bestücken der Halteeinrichtung (9, 10) verfahrbar oder zu öffnen und zu schließen ist.

12. Vorrichtung nach einem der Ansprüche 1 bis 11, **dadurch gekennzeichnet, dass** zumindest ein Axicon des Doppelaxicons (4) oder der zwei Reflex-Axicon als Halter eine im Laserwellenlängenbereich hochtransparente Platte mit Loch zur Befestigung der Kegelspitze aufweist.

## Claims

1. Device for joining and tapering fibres or optical components having a retaining device for retaining the fibres or the optical components in the processing position, a laser beam source for emitting a laser beam and beam-forming elements for directing the laser beam towards the processing site, wherein
at least a first beam-forming element (4, 25) for producing an annular radiation is inserted into the beam path and a further, second beam-forming element (14, 19, 20) for specifying the angle of incidence of the annular radiation onto the fibre(s) or the optical components at the processing position is provided
the first beam-forming element is configured as two reflex axicons or as a double axicon (4) with parts (5, 6) at a spacing from each other, the spacing of the two reflex axicons or the parts (5, 6) of the double axicon prescribing the annular diameter of the radiation,
the spacing of the parts (5, 6) of the double axicon (4) or the reflex axicons is adjustable to achieve different annular diameters of the radiation,
**characterised in that**
the further second beam-forming element is a a stepped axicon or a parabolic mirror, which directs the annular radiation towards the processing site for an variable adjustment of the angle of incidence at the processing site.

2. Device according to claim 1, **characterised in that** the spacing of the parts (5, 6) of the double axicon (4) or the reflex axicons is, continuously adjustable.

3. Device according to one of the claims 1 or 2, **characterised in that** the angle of incidence can be adjusted such that the processing site is visible perpendicular to the axis of the fibre(s) and/or of the optical component.

4. Device according to one of the claims 1 to 3, **characterised in that** a planar mirror (11) for deflecting the annular radiation is disposed between first and further second beam-forming element (4, 16, 19) or between second beam-forming element and processing site.

5. Device according to claim 4, **characterised in that** the spacing between processing site and planar mirror is defined such that a contamination of the planar mirror by the processing process is prevented.

6. Device according to claim 5, **characterised in that** the planar mirror (11) is divided in two and has a hole boring or is slotted.

7. Device according to claim 6, **characterised in that** the stepped axicon (14) or the parabolic mirror (19) are divided or slotted.

8. Device according to one of the claims 1 to 7, **characterised in that** means for reducing or changing the power density of the radiation at the processing site are provided in the beam path.

9. Device according to claim 8, **characterised in that** the means for reducing or changing the power density are configured as a structure which is incorporated in the stepped axicon (16) or the parabolic mirror (19) in order to reduce the power density of the radiation, such as an additional sphere, asphere or diffractive structure for producing a divergent or convergent reflected radiation or as an additional optical element.

10. Device according to one of the claims 1 to 9, **characterised in that** a telescope (2, 3) for adaptation of the laser beam diameter and possibly the power density at the processing site is disposed subsequent to the laser beam source (1).

11. Device according to one of the claims 4 to 10, **characterised in that** the planar mirror (11) or the stepped axicon or the parabolic mirror is movable or can be opened and closed in order to equip the retaining device (9, 10).

12. Device according to one of the claims 1 to 11, **characterised in that** at least one axicon of the double axicon (4) or of the two reflex axicons has, as holder, a plate which is highly transparent in the laser wavelength range and has a hole for mounting the conical tip.

## Revendications

1. Dispositif pour joindre et effiler des fibres ou des composants optiques, comportant un dispositif de retenue permettant de maintenir les fibres et les composants optiques dans la position de traitement, une source de rayon laser permettant d'émettre un rayon laser, et des éléments de formage du faisceau permettant de diriger le rayon laser sur le site de traitement,
- au moins un premier élément de formage du faisceau (4, 25) pour générer un faisceau circulaire étant inséré dans la trajectoire du faisceau, et un deuxième élément de formage du faisceau (14, 19, 20) supplémentaire étant prévu pour définir l'angle d'incidence du faisceau circulaire sur la/les fibre(s) ou les composants optiques dans la position de traitement,
- le premier élément de formage du faisceau étant réalisé sous la forme d'un axicon bi-reflex ou sous la forme d'un double axicon (4) avec des parties (5, 6) écartées l'une de l'autre, la distance de l'axicon bi-reflex ou entre les parties (5, 6) du double axicon définissant le diamètre du faisceau circulaire,
- la distance entre les parties (5, 6) du double axicon (4) ou de l'axicon bi-reflex étant réglable en vue d'obtenir différents diamètres du faisceau circulaire,
- **caractérisé en ce que** le deuxième élément de formage du faisceau supplémentaire est un axicon étagé ou un miroir parabolique qui guide le faisceau circulaire sur le site de traitement, pour un réglage variable de l'angle d'incidence sur le site de traitement.

2. Dispositif selon la revendication 1, **caractérisé en ce que** la distance entre les parties (5, 6) du double axicon (4) ou de l'axicon bi-reflex est réglable en continu.

3. Dispositif selon la revendication 1 ou 2, **caractérisé en ce que** l'angle d'incidence peut être réglé de telle sorte que le site de traitement est visible perpendiculairement à l'axe de la fibre ou des fibres ou du composant optique.

4. Dispositif selon l'une quelconque des revendications 1 à 3, **caractérisé en ce qu'**un miroir plan (11) destiné à changer la direction du faisceau circulaire est disposé entre le premier et le deuxième élément de formage du faisceau (4, 16, 19) supplémentaire ou entre le deuxième élément de formage du faisceau et le site de traitement.

5. Dispositif selon la revendication 4, **caractérisé en ce que** la distance entre le site de traitement et le miroir plan est définie de manière à empêcher un encrassement du miroir plan par le processus de traitement.

6. Dispositif selon la revendication 5, **caractérisé en ce que** le miroir plan (11) est divisé en deux et comporte une forure ou est fendu.

7. Dispositif selon la revendication 6, **caractérisé en ce que** l'axicon étagé (14) ou le miroir parabolique (19) sont divisés ou fendus.

8. Dispositif selon l'une quelconque des revendications 1 à 7, **caractérisé en ce qu'**il est prévu des moyens pour réduire ou modifier la densité de puissance du faisceau au niveau du site de traitement dans la trajectoire du faisceau.

9. Dispositif selon la revendication 8, **caractérisé en ce que** les moyens pour réduire ou modifier la densité de puissance sont réalisés sous la forme d'une structure, incorporée dans l'axicon étagé (16) ou dans le miroir parabolique (19) et destinée à réduire la densité de puissance du faisceau, telle qu'une structure supplémentaire sphérique, asphérique ou diffractive pour générer un faisceau réfléchi divergent ou convergent ou sous la forme d'un élément optique supplémentaire.

10. Dispositif selon l'une quelconque des revendications 1 à 9, **caractérisé en ce qu'**un télescope (2, 3), destiné à ajuster le diamètre du rayon laser et, le cas échéant, la densité de puissance dans la position de traitement, est monté en aval de la source de rayon laser (1).

11. Dispositif selon l'une quelconque des revendications 4 à 10, **caractérisé en ce que** le miroir plan (11) ou l'axicon étagé ou le miroir parabolique est mobile ou est destiné à être ouvert ou fermé pour équiper le dispositif de retenue (9, 10).

12. Dispositif selon l'une quelconque des revendications 1 à 11, **caractérisé en ce qu'**au moins un axicon du double axicon (4) ou de l'axicon bi-reflex comportent en tant que support une plaque à transparence élevée dans la zone de longueur d'ondes du laser, munie d'un trou pour la fixation du sommet du cône.
